# EUROPEAN PATENT APPLICATION

(11) **EP 4 397 453 A1**
(43) Date of publication of application: **10.07.2024**
(21) Application number: 23275001.8
(22) Date of filing: 06.01.2023
(51) Int. Cl.: B25J 9/16, B25J 11/00, G05B 19/402, B23B 35/00

(54) **A TOOL ENGAGEMENT COUPLING AND ASSOCIATED METHOD**

(71) Applicant: BAE SYSTEMS plc, London SW1Y 5AD (GB)
(72) Inventor: The designation of the inventor has not yet been filed
(74) Representative: BAE SYSTEMS plc Group IP Department

(57) **Abstract**

A tool engagement coupler configured to deliver a tool at a working position on a workpiece, the tool engagement coupler further being moveable by a robotic arm to engage with a locator at the working position. The tool engagement coupler includes an engagement member having a first predetermined shape adapted to engage with the locator having a second predetermined shape. The tool engagement coupler is adapted to be moved by the robotic arm based on a decreasing level of spatial tolerance as the engagement member approaches the locator based at least in part on the first predetermined shape and the second predetermined shape.

## Description

### FIELD

The present invention relates to a tool engagement coupling and associated method, particularly configured to position a tool in a predetermined position on a workpiece.

### BACKGROUND

Vehicle manufacture traditionally requires skilled operators to work within un-ergonomic restricted access areas for long periods of time to complete drilling tasks, using an array of different tooling and shop aids. Under conventional methods there are a large range of hard to quantify process variables such as the skill and concentration level of the operator, placement accuracy of drill tooling (block and bush, drill jigs etc.) and the like, as well as the serviceability of the hand tooling (pneumatic drills, drill bits, torque wrenches, etc.) and the tooling. All of these factors contribute to the increased likelihood of manufacturing NCR's (Non Conformance Report)/quality defects, variance in process completion time and cost of air vehicle manufacture.

Various solutions have been proposed but these have failed to address the problem, meaning the requirement still exists to automate at least some of the actions currently provided by operators. In addition, a need exists for accurate processes which ensures tooling is guided into a precise location in order to carry out any operation.

### SUMMARY

According to an aspect of the present invention, there is provided a tool engagement coupler configured to deliver a tool at a working position on a workpiece, the tool engagement coupler further being moveable by a robotic arm to engage with a locator at the working position; wherein the tool engagement coupler includes an engagement member having a first predetermined shape adapted to engage with the locator having a second predetermined shape; wherein the tool engagement coupler is adapted to be moved by the robotic arm based on a decreasing level of spatial tolerance as the engagement member approaches the locator based at least in part on the first predetermined shape and the second predetermined shape.

Preferably, wherein during movement of the tool engagement coupler towards the working position, the tool engagement coupler is compliant in multiple axes.

Preferably, wherein the movement of the tool engagement coupler is configured to be restrained from movement in one or more axes.

Preferably, wherein the tool engagement coupler is movable by the robotic arm in the z axis as the engagement member approaches the locator.

Preferably, wherein when the first and second predetermined shapes are engaged, the movement of tool engagement coupler becomes restrained in one or more axes.

Preferably, wherein the tool engagement coupler is configured to be compliant in at least one of x, y, z, pitch, roll and yaw axes.

Preferably, wherein the first predetermined shape and the second predetermined shape are configured to move the engagement member towards the working position by moving the tool engagement coupler.

Preferably, wherein the first predetermined shape comprises a tapered shape at the distal end of the engagement member.

Preferably, wherein the first predetermined shape comprises a central opening.

Preferably, wherein the engagement member comprises one or more locking components configured to engage with the second predetermined shape of the locator.

Preferably, wherein the one or more locking components extend radially from the engagement member.

Preferably, wherein the locking components force the engagement member into the locator.

Preferably, wherein the locking components orientate the first and second shapes to align the central opening with the working position.

Preferably, wherein the second predetermined shape comprises a bowl portion and a lip for receiving the locking components.

Preferably, wherein the one or more locking components have a predetermined length to fit between the bowl portion and the lip.

Preferably, wherein the predetermined length of the one or more locking components prevents movement of the tool engagement coupler in the z axis.

According to an aspect of the present invention, there is provided a locator configured to guide a tool engagement coupler to a working position, wherein the tool engagement coupler comprises an engagement member having a first predetermined shape and is movable by a robotic arm, the locator comprising: a tool opening configured to receive the engagement member; a second predetermined shape configured to engage with the first predetermined shape; wherein the engagement of the first predetermined shape and the second predetermined shape decrease the level of spatial tolerance of movement of the robotic arm as the engagement member approaches the locator.

Preferably, the tool opening having a width determined by a positional precision of the robotic arm.

Preferably, wherein the second predetermined shape comprises a bowl portion.

Preferably, wherein the second predetermined shape comprises a lip.

Preferably, wherein the lip is configured to receive at least one locking component from the engagement member when the at least one locking component moves to a predetermined radial extension.

According to an aspect of the present invention, there is provided a system configured to engage a tool engagement coupler (102) with a locator located relative to a workpiece at a working position of a tool, the system comprising: the tool engagement coupler; the locator; and a robotic arm configured to control movement of the tool engagement coupler.

Preferably, wherein the system is configured to deploy the tool into a central opening of the tool engagement coupler when the tool engagement coupler and the locator are engaged.

Preferably, wherein the robotic arm has a spatial precision tolerance; and wherein the diameter of a tool opening of the locator is equal to or greater than the spatial precision tolerance of the robotic arm.

According to an aspect of the present invention, there is provided a method for delivering a tool at a work position on a workpiece, the method comprising: moving a tool engagement coupler towards a locator located at the work position for engagement therewith; determining a distance of the tool engagement coupler from the locator; moving the tool engagement coupler into engagement with the locator, wherein the engagement is based on a first predetermined shape of an engagement member of the tool engagement coupler and a second predetermined shape of the locator, and moving the tool engagement coupler based on a decreasing level of spatial tolerance as the engagement member approaches the locator based at least in part on the first predetermined shape and the second predetermined shape.

### BRIEF DESCRIPTION OF THE FIGURES

Embodiments of the invention will now be described by way of example only with reference to the figures, in which:
Figure 1 shows a block diagram of multifunction mobile platform in accordance with an aspect of the present invention;
Figure 2 shows a simplified diagram of a tool engagement coupler, a locator, and a locator jig for use with the platform of figure 1;
Figure 3 shows a simplified diagram demonstrating movement of the tool engagement coupler;
Figure 4 shows a schematic diagram demonstrating engagement between the tool engagement coupler and the locator;
Figure 5 shows a simplified diagram of the locator jig comprising a plurality of locators; and
Figure 6 shows a schematic diagram of the locator.

### DETAILED DESCRIPTION

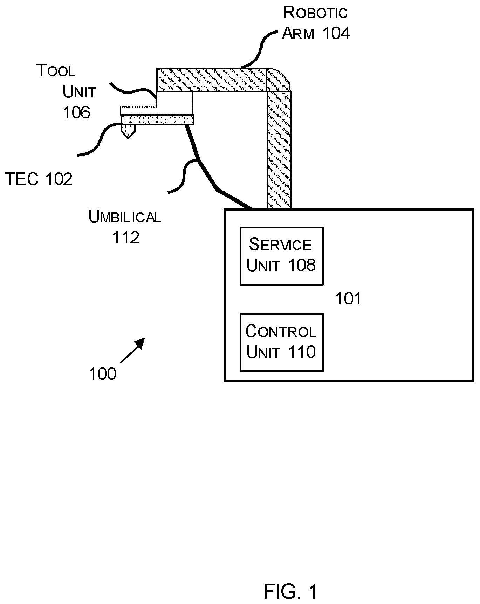

A system 100 includes a Mobile Platform (MP) 101 displayed in Figure 1, is a technology that has been developed to undertake a range of manufacturing tasks in either a completely autonomous fashion, or collaboratively with operators. One use case for the invention is the development of a tool engagement coupler (TEC) for use in restricted or unrestricted access drilling or other tooling.

Air-vehicle manufacture traditionally requires skilled operators to work within un-ergonomic restricted access areas for long periods of time to complete tasks. Under conventional methods there are also a large range of hard to quantify process variables such as placement accuracy of tooling. This often results in defects, variance in process completion time and cost of air vehicle manufacture. Employing an autonomous apparatus, such as the system 100, to perform manufacturing tasks poses numerous challenges.

Firstly, the positioning of the apparatus to perform a task needs to be precise such that actions (e.g., drilling) taking place on components are performed in a required working position (WP). This is especially important for the manufacture of sophisticated structures that require precision engineering such as components for aeronautical applications. Embodiments described herein achieve this precision by providing a tool engagement coupler, connected to a mobile platform (MP), and a locator, positioned proximate to the working position, which engage with one another to guide a tool into the working position.

It is unlikely the automated positioning of the apparatus in the working position to perform tasks is going to be perfect on every occurrence. Therefore, it is desirable for the positioning of the apparatus to be provided with a spatial tolerance when approaching a working position (e.g., ±5mm). The embodiments described below achieve this spatial tolerance by configuring the TEC and the locator to guide the tool into the correct engagement position.

Figure 1 will now be explained in greater detail.

A system 100 includes a MP 101, a service unit 108 and a control unit 110. The MP 101 enables the system 100 to move automatically to a working site location. The MP 101 is connected to a robotic arm 104. The robotic arm 104 is connected to a tool unit (TU) 106 which is connected to a tool engagement coupler or coupling (TEC) 102. The system 100 also includes a robot umbilical 112, connected from the system to the TEC, which comprises components, such as IO (Input Output) supplies, which operate the TEC.

The TEC 102 is connected to a robotic arm 104. The robotic arm 104 is responsible for positioning the TEC 102 in the vicinity of the locator and applying the force required for the TEC 102 to engage with the locator. The robot arm 104 houses components configured to operate the mechanisms housed within the TEC 102 which enable the TEC to engage with the locator. The components configured to operate the mechanisms housed within the TEC 102 are separate to the robotic arm 104. A robot umbilical 112 connected to the system 100 and the TEC 102 houses the components configured to operate the TEC 102. The robotic arm 104 is connected to the system 100 which comprises a service unit 108 and a control unit 110. The control unit 110 is pre-programmed to control the positioning and movement of the robotic arm.

The tool engagement coupler or coupling (TEC) 102 is configured to guide a tool to a WP. This is achieved by guiding and engaging the TEC towards a locator positioned at a predetermined position relative to a workpiece. The guidance and engaging of the TEC 102 and the locator provide precise positioning of the tool on the workpiece when the TEC 102 and the locator are engaged. The guidance towards and the engaging of the TEC 102 and the locator operates within a predetermined spatial tolerance (e.g., ±5mm displacement of the tool from the WP) for the initial positioning of the TEC 102 prior to final engagement with the locator.

As previously described, a control unit 110 controls the operation and movement of the robotic arm 104 to ensure the tool engagement coupling is accurately located relative to the locator workpiece at the WP. As described above the locator is at a known predetermined position in respect of the Cartesian axes and in terms of the rotational axes (Roll, Pitch and Yaw, referred to as A, B, C). The positioning not only needs to be accurate but also to be smooth and consistent. If the movement is jerky and/or ill-defined there could be a problem with the coupling and worse damage to the workpiece, engaging mechanism and/or the tool being used.

The robotic arm 104 is connected to the system 100 and comprises a plurality of joints along the length of the arm. The joints enable sections of the robotic arm 104 to change the rotation, pitch and yaw relative to one another which allows 6 degrees of freedom (6DOF) movement of the TEC 102. The plurality of joints enable the robotic arm 104 to flexibly adopt different shapes, as a result the shape of the robotic arm 104 can be adapted to fit to the environment local to the WP. The joints comprise torque sensors which provide feedback of the forces subject to the robotic arm 104 to the control unit 110.

The TU 106 comprises the tool and the means to drive the tool. The TU 106 includes an advanced drilling unit (ADU). The TU 106 is connected to the robotic arm via a tool changer configured to connect to different types of TUs. The TU 106 inserts the tool into the TEC 102. The service unit 108 is configured to supply components of the system 100 with substances required for the components to function such as lubricants and compressed air.

The present invention seeks to address some of the issues associated with guaranteeing a smooth delivery of the tool engagement coupling to engage with the locator without misalignment and potential collisions.

The system 100 includes hardware and software functions for automation of tasks. Through the programming and process the MP can be moved to the required location for the task in hand. The MP includes a motor (not shown) in the main body which enables the MP to move around a factory location or within a vehicle. The MP autonomously moves to location of the workpiece on which tooling is required. Having arrived at the location within the factory the MP stops moving and the robotic arm 104 is deployed to be moved towards the locator.

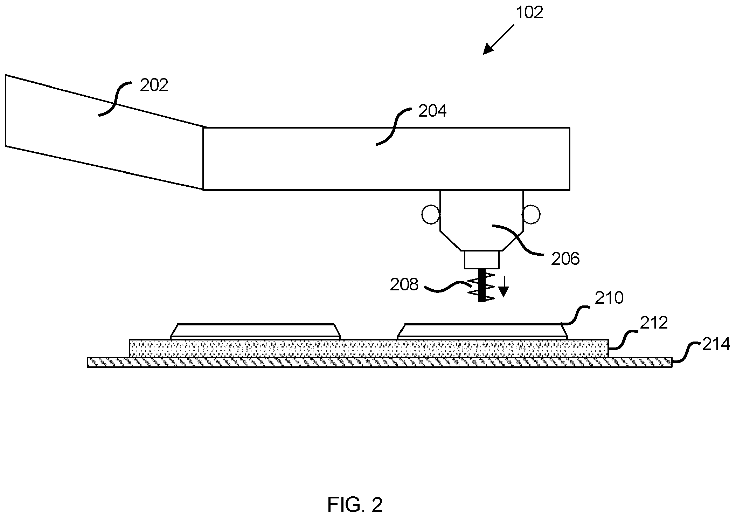

Figure 2 shows a two-dimensional representation of the tool engagement coupler 102. As described previously, the TEC 102 is connected to the robotic arm 104 via the TU 106. The TEC 102 comprises a first part 202, a second part (also referred to as the drive portion herein) 204 and an engagement member 206. A tool 208, provided by the TU 106, is housed by the engagement member 206. A locator 210 of a plurality of locators housed by a locator jig 212 is positioned below the engagement member 206. The locator jig 212 is affixed to a workpiece 214.

The first part 202 is positioned at the proximal end of the TEC 102 and forms the connection with the robotic arm 104 via the TU 106. The first part 202 comprises motors configured to power components in the second part 204. The motors may comprise a stepper motor that may be accompanied by an encoder where the encoder provides positioning feedback to the controller. The controller receives information from proximity sensors located in the engagement member 206. The motors are controlled by the control unit 110. The motors are operated via controls passed through the robot umbilical 112. The connection between the motor portion 202 and the drive portion 204 may comprise a drive shaft or drive coupling.

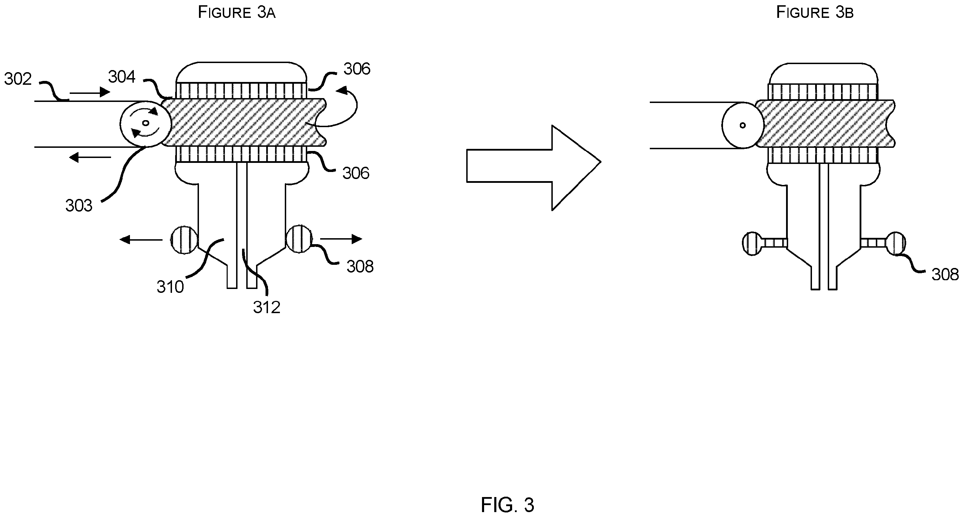

The second part 204 of the TEC 102 comprises the components configured to drive an engagement mechanism in the engagement member 206. The engagement mechanism is described in more detail in Figure 3. The drive portion 204 comprises one or more of a series of gears (e.g. mitre gears), drive belts and drive belt tensioners connected to the drive shaft or drive coupling in some cases. A worm drive is used to drive the engagement mechanism in the engagement member 206 in some embodiments.

The engagement member 206 of the TEC 102 is configured to engage with a locator at the WP. The engagement member 206 is also configured to house a tool 208. The engagement member 206 has a predetermined shape adapted to engage with the locator 210 having a second predetermined shape. The first and second predetermined shapes will be described in more detail in reference to Figures 3, 4 and 6. Although it is not shown in Figure 2, the engagement member 206 is cylindrical in shape in some cases and includes an opening through the centre through which the tool 208 is able to pass as indicated by the arrow in Figure 2. Figure 3 displays a schematic two-dimensional side profile view of the engagement member 206 which is moveable to engage with the locator 210.

Figure 3 shows a drive belt 302 connected to a worm drive 303. The worm drive 303 is coupled with a worm wheel 304 housed within an engagement member body 310. Rotary bearings are shown in contact with the worm wheel 304. Locking components 308 are shows connected to the engagement member body 310.

The drive belt 302 is shown connected to the worm drive 303 and is adapted it rotate the worm drive (as depicted by the arrows on the components). The drive belt 302 and worm drive 303 are located within the second part 204 of Figure 2. The worm drive 303 contacts the worm wheel 304 and drives the rotation of the worm wheel 304. Rotary bearings 306 are also incorporated to accommodate and facilitate the rotation of the worm wheel 304. The worm wheel 304 is connected to one or more locking components 308 via a rotating cam (not shown in Figure 3) located within the engagement member body 310. As the worm wheel 304 rotates, the locking components 308 are extended radially from the engagement member body 310. Although Figure 3 displays the locking components 308 being located outside the width of the engagement member body 310, the locking components 308 may alternatively be housed within the engagement member body 310.

Figure 3A shows arrows indicating the movement and rotation of the drive belt 302, worm drive 303, worm wheel 304 and locking components 308. Figure 3B shows the final position of the locking components 308 following the rotation of the drive belt 302, worm drive 303 and worm wheel 304. The engagement member 206 further comprises a central opening 312 configured to house a tool or a mounting of a tool. The central opening 312 is configured to secure the tool in place in some cases.

In the extended position, the locking components 308 interlock with the locator and the central opening is located within a known spatial tolerance with the WP. The locking components 308 are spherically shaped in the example shown in Figure 3, although this is not a limitation and other appropriate shapes and sizes may be used. The spherical locking components 308 may provide a smoother insertion of the locking components 308 into the corresponding slots in the locator.

The engagement member body 310 also comprises piping directed towards the end of the engagement member 206 in some cases. The piping is connected to a vacuum which is housed in either the TEC 102 or the MP 101, and therefore the piping extends through the robotic arm in some cases. The vacuum operates through the piping to remove swarf removal at the workpiece.

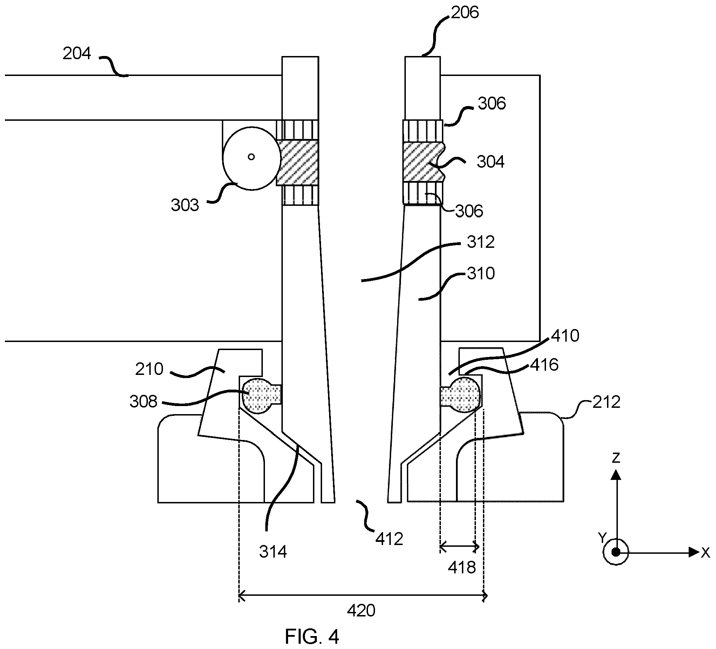

Figure 4 shows a schematic two-dimensional side profile view of the engagement member 206 in an engaged state with a locator 210. The locator 210 is fixed to a locator jig 212. The locator 210 is a bush in some cases. The locator 210 is fixed to the locator jig 212 in any appropriate manner, including mechanical fixing, adhesive, magnetic fixing etc. The locator 210 comprises a tool opening 410 and a working site opening 412 on an opposite side closest to the working site. Although it is not shown in Figure 4, the tool opening 410 may be circular. To ensure the TEC 102 can be positioned precisely enough for the locator 210 to receive the engagement member 206, the diameter of the tool opening 410 may be determined by the spatial precision of the robotic arm 104. For example, the diameter may be equal to or greater than the spatial precision of the robotic arm. The locator 210 further comprises a lip (also referred to as a lipped portion herein) 416 extending into the tool opening 410 at the tool opening 410 side of the locator 210.

The engagement member 206 and locator 210 work in combination to allow the robotic arm 104 within the predetermined spatial tolerance when positioning the TEC 102 at the WP. Figure 4 shows the engagement member body 310 having a first predetermined shape comprising a tapered end 314 forming a conical shape in three-dimensions. The locator 210 is shown having a second predetermined shape comprising a sloped 'bowl-like' internal structure. As a result, when the tapered end 314 of the engagement member 206 contacts the sloped internal structure of the locator 210 and is moved towards the locator 210, the central opening 312 is moved to the centre of the locator 210 at the WP. Therefore, the level of movement or spatial tolerance of the TEC 102 by the robotic arm 104 decreases as the engagement member 206 approaches the locator 210 based at least in part on the first predetermined shape of the engagement member body 310 and the second predetermined shape of the locator 210. When the engagement member 206 is positioned above the locator, the movement or spatial tolerance of the TEC 102 is determined by the range of motion of the robotic arm 104. Whereas, when the engagement member is positioned with the locator, the movement or spatial tolerance of the TEC 102 is greater towards the top compared to the bottom of the locator 210.

The robotic arm and accordingly the TEC 102 are more compliant in the x and y axes compared to the z axis (indicated in Figure 4) which are set according to control modes in some cases. The increased compliance also extends to the pitch, roll and yaw of the robotic arm in some cases. The TEC 102 is able to be moved by the robotic arm 104 in the z axis at this time. As a result, the position and configuration of the robotic arm 104 (and therefore the position of the TEC 102) reacts to the interfacing between the engagement member 206 and locator 210 whilst the TEC is moved in the z direction. Once the TEC 102 is correctly positioned the robotic arm 104 moves the TEC 102 in the z axis by a predetermined amount thereby engaging the TEC 102 and the locator 210 in the final WP.

If there is alignment the engagement member 206 is moved towards the workpiece by the robotic arm 104 and the tapered end 314 of the engagement member 206 contacts the edges of the opening of the locator 210 thereby guiding the engagement member 206 towards the centre of the locator 210.

The engagement member 206 and locator 210 also work in combination to secure the position of the central opening 312 at the WP. The locator 210 comprises a lipped portion 416 around the edge of the tool opening which is configured to receive the locking components 308 of the engagement member 206. As a result, the engagement member 206 is prevented from moving other than in the z axis into the locator 210. Furthermore, the locking components 308 also prevent the engagement member 206 moving in the x-y axis of the locator 210. The locking components 308 apply a force to the inside of the locator 210 thereby holding the engagement member 206 in place. The engagement member 206 is therefore held in a stiff position as the tool 208 is delivered to the WP via the central opening 312.

The movements that are restricted in the different modes of operation need not be as described above. Depending on the use case different axes may be stiff or compliant as will be described in greater detail below.

The extension length 418 of the locking components 308 are preconfigured to a length that is based on the width of the lipped portion 420 of the locator 210. The extension of the locking components 308 therefore contributes to the precision of the tool 208 delivery to the WP by the locking components 308 ensuring a pre-defined distance from the lip 416 of the locator 210. The locking components 308 also ensure a pre-determined vertical displacement from the working site by extending the locking components 308 into the slopped internal structure of the locator 210 causing the engagement member 206 to move in the z direction away from the WP.

The engagement of the first predetermined shape of the engagement member 206 and the second predetermined shape of the locator 210 means the precise positioning of the engagement member 206 is not entirely dependent on the control unit's 110 control of the robotic arm 104. The control unit 110 is responsible for positioning the TEC 102 within a spatial tolerance of the WP (e.g., ±20mm) whilst the fine positioning is achieved with using the features described in relation to the engagement member 206 and the locator 210.

Reducing the responsibility of fine positioning on the control unit 110 increases the speed and efficiency of delivering a tool to a working site. Additionally, it means less accurate robot systems, such as a cobot, can be used for precise tooling with the assistance of the TEC 102 and locator 210. Considering the robotic arm 104 can be used to move the TEC 102 in space deprived environments, the control unit may have to process a large number of parameters relating to the configuration of the robotic arm 104 when making minor adjustments to the position of the TEC 102 (e.g., the movement in 6 degrees of freedom of the joints of the robotic arm 104). The processing work load is reduced by the engagement member 206 and positioning a locator 210 at the WP as the fine positioning is automatically achieved due to the first and second predetermined shapes of the engagement member 206 and locator 210 respectively as described above.

Due to the configuration of the TEC 102, it is possible to be powered using only electricity. Typical clamping systems require a supply of compressed air to secure a tooling mechanism to a working site which is not a necessary requirement for the features displayed in Figures 1-4. Without the need for a compressed air supply, the system 100 can be integrated into a mobile platform because of reduced weight of an electrically powered system compared to a pneumatic or hydraulic system. Thus, the system can be programmed to move to the working site automatically, whilst also being able to move to restricted spaces or hazardous environments.

The contribution of the features displayed in Figures 1-4 can be explained by describing the step by step process of delivering a tool to a working site. Firstly, the control unit 110 moves the robotic arm 104 into a working area utilising the 6 degrees of freedom of the arm to avoid any access restrictions to the WP (Figure 1). The robotic arm 104 and the TEC 102 are moved by the control unit towards a WP where a locator jig 212 comprising locator(s) 210 is positioned. The control unit 110 then instructs the robotic arm 104 to apply a force in the direction towards the locator, thereby moving the robotic arm in the z direction as the engagement member 206 approaches the locator 210, whilst instructing the robotic arm 104 to be compliant in one or more axes and stiff in at least one axis depending on the relative orientations of the TEC 102 and the locator 210. As the tapered end of the engagement member 206 contacts the sloped internal structure of the locator 210, the engagement member 206 slides towards the centre of the locator 210. Following the engagement of the tapered end of the engagement member 206 and the sloped internal structure of the locator 210, the movement of the TEC 102 becomes more restrained in one or more axes (e.g., the x and y axis).

Once the engagement member 206 engages the locator 210, the control unit 110 activates the motors in the first part 202 of the TEC 102 which drives the components in the second part 204 of the TEC 102. Activation of the motors is initiated in response to the torque sensors in the robotic arm 104 detecting a change of force subject to the robotic arm 104 in response to the engagement member 206 contacting the locator 210. Proximity sensors in or on the engagement member 206 facilitate the activation in some cases. This causes the mechanism in the engagement member 206 to activate causing the locking components 308 to extend radially from the engagement member 206. The locking components 308 extend under a lip 416 on the top edge of the locator 210 and apply a force to the inside wall of the locator 210, thus fixing the engagement member 206 in position and preventing movement of the TEC in the x, y, z, pitch, roll and yaw axes. In the fixed position, the central opening 312 of the engagement member with the working position. Sensors positioned on or within the engagement member 206 track the extension of the locking components 308 in some cases to detect when they are positioned under the lip 416. Similar sensors may also detect the rotation of the cam to indirectly detect the extension of the locking components 308. During the extension of the locking components 308, the control unit 110 instructs the robotic arm 104 to operate in one of the control modes (e.g., cartesian impedance control modes). As a result, the locking components 308 apply force to the internal structure of the locator 210 and the engagement member 206 is moved to a precise pre-determined position in the x, y and z axes and configured in pitch, yaw and roll orientations.

The example described above shows how the features included in the embodiments of Figures 1-4 interoperate with one another to position a tool to a pre-determined working site.

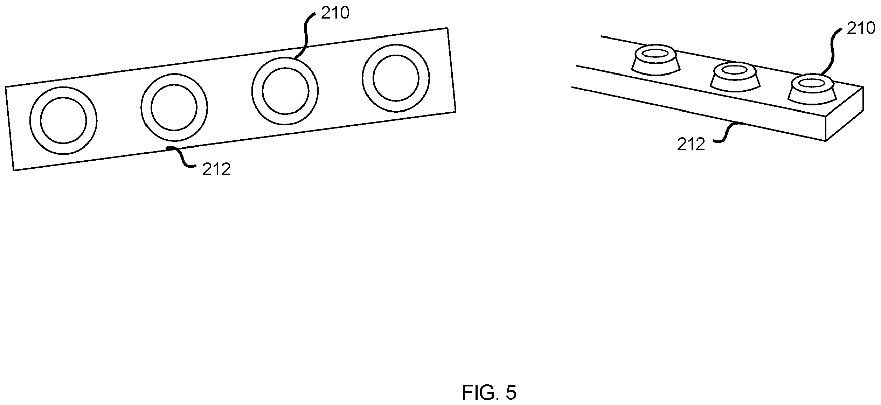

Figure 5 shows a schematic diagram of a plurality of locators 210 fixed into a locator jig 212. Prior to a working task being performed, the locator jig 212 is fixed in the region where one or more working sites are located on a workpiece 214. Figure 5 displays the locator jig 212 arranging the locators 210 in a row however the locators may be arranged in any suitable configuration (e.g., a matrix of locators 210, etc.). The locators 210 are positioned above pre-determined WP by the locator jig 212. The locators 210 are therefore positioned to guide the engagement member 206 to the correct positions for the tool 208 to be delivered in sequence to the plurality of WPs defined by the locators 210.

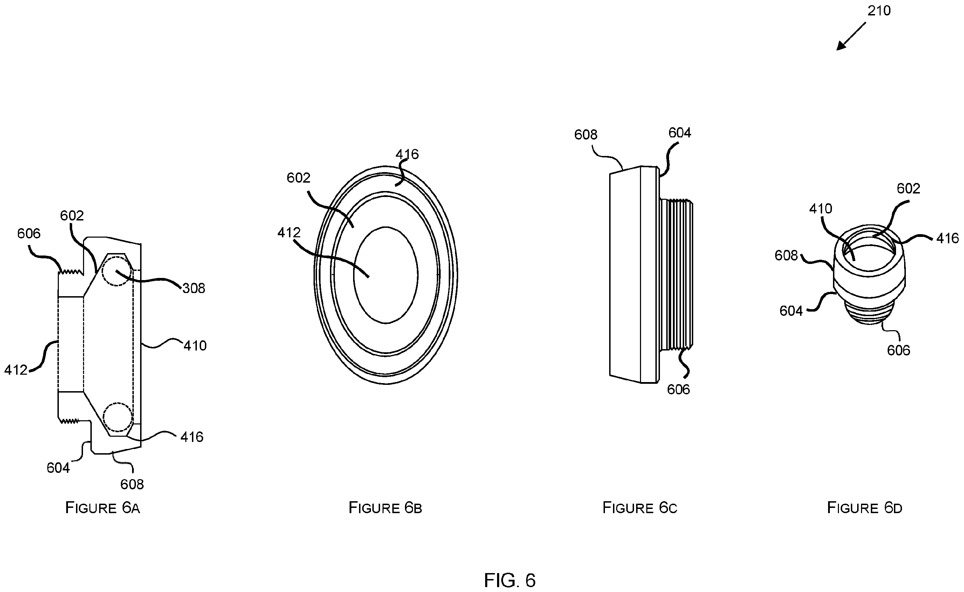

Figures 6A-6D display a schematic diagram of the locator. Figure 6A shows a two-dimensional side profile view of the locator 210 with the internal structure viewable. Figure 6B shows a top view of the locator 210. Figure 6C shows an opaque two-dimensional side profile view of the locator 210. Figure 6D shows a diagram of the locator 210.

Two locking components 308 (as displayed in Figures 3 and 4) are included to show how the locking components 308 interact with the internal structure of the locator 210. The internal structure of the locator 210 comprises a lip 416, a sloped, bowl portion 602, a tool opening 410 and a working site opening 412 and an external lip 604. The lip 416 extends around the perimeter of the locator 210. The internal structure of the locator 210 further comprises the sloped, bowl portion 602 surrounding the working site opening 412 in the centre of the locator 210. The centre of the working site opening 412 is positioned at the WP. The locator may also comprise a threaded portion 606 on the underside that is fixable to the locator jig 212. Although not illustrated in Figure 6, the locator 210 may use any appropriate fixing mechanism. The locator also comprises an external lip 604 on the outside perimeter 608 such that the locator 210 extends a pre-defined distance from the top side of the locator jig 212. The perimeter of the tool opening 410 is based on the limitations of how close the robotic arm 104 can position the engagement member to the WP before it needs assistance from the guidance provided by the locator 210.

## Claims

1. A tool engagement coupler (102) configured to deliver a tool (208) at a working position on a workpiece (214), the tool engagement coupler further being moveable by a robotic arm (104) to engage with a locator (210) at the working position;
wherein the tool engagement coupler (102) includes an engagement member (206) having a first predetermined shape adapted to engage with the locator (210) having a second predetermined shape,
wherein the tool engagement coupler (102) is adapted to be moved by the robotic arm (104) based on a decreasing level of spatial tolerance as the engagement member (206) approaches the locator (210) based at least in part on the first predetermined shape and the second predetermined shape.

2. The tool engagement coupler of claim 1, wherein during movement of the tool engagement coupler towards the working position, the tool engagement coupler is compliant in multiple axes.

3. The tool engagement coupler of claim 1 or claim 2, wherein the movement of the tool engagement coupler is configured to be restrained from movement in one or more axes.

4. The tool engagement coupler of any preceding claim, wherein the tool engagement coupler is movable by the robotic arm in the z axis as the engagement member approaches the locator.

5. The tool engagement coupler of any preceding claim, wherein when the first and second predetermined shapes are engaged, the movement of the tool engagement coupler becomes restrained in one or more axes.

6. The tool engagement coupler of any preceding claim, wherein the first predetermined shape and the second predetermined shape are configured to move the engagement member towards the working position by moving the tool engagement coupler.

7. The tool engagement coupler of any preceding claim, wherein the engagement member comprises one or more locking components (308) configured to engage with the second predetermined shape of the locator.

8. The tool engagement coupler of claim 7, wherein the one or more locking components extend radially from the engagement member.

9. The tool engagement coupler of claim 7 or claim 8, wherein the locking components force the engagement member into the locator.

10. The tool engagement coupler of any one of claims 7 to 9, wherein the second predetermined shape comprises a bowl portion (602) and a lip (416) for receiving the locking components.

11. A locator (210) configured to guide a tool engagement coupler (102) to a working position, wherein the tool engagement coupler (102) comprises an engagement member (206) having a first predetermined shape and is movable by a robotic arm (104), the locator (210) comprising:
a tool opening (410) configured to receive the engagement member (206);
a second predetermined shape configured to engage with the first predetermined shape; wherein
the engagement of the first predetermined shape and the second predetermined shape decrease the level of spatial tolerance of movement of the robotic arm (104) as the engagement member (206) approaches the locator (210).

12. The locator of claim 11, the tool opening having a diameter determined by a spatial precision of the robotic arm.

13. The locator of claim 11 or claim 12, wherein the second predetermined shape comprises a bowl portion (602).

14. The locator of any one of claims 11 to 13, wherein the second predetermined shape comprises a lip (416).

15. A system (100) configured to engage a tool engagement coupler (102)with a locator (210) located relative to a workpiece (214) at a working position of a tool, the system comprising:
the tool engagement coupler (102) of claims 1 to 10;
the locator (210) of claims 11 to 14; and
a robotic arm (104) configured to control movement of the tool engagement coupler (102).
